# EUROPEAN PATENT SPECIFICATION

(11) **EP 1 151 778 B1**
(45) Date of publication and mention of the grant of the patent: **10.11.2010**
(21) Application number: 00904031.2
(22) Date of filing: 18.02.2000
(51) Int. Cl.: A63H 9/00, B44B 1/02, G06T 7/00, G05B 19/4097, G01B 11/24, B23Q 15/00, B44C 3/04

(54) **REAL 3-D MODEL FORMING DEVICE**
VORRICHTUNG ZUR FORMUNG REALER 3D-MODELLE
DISPOSITIF DE MISE EN FORME DE MODELES TRIDIMENSIONNELS REELS

(30) Priority: 19.02.1999 JP 4238999; 29.09.1999 JP 27709999; 31.01.2000 JP 2000021003
(43) Date of publication of application: 07.11.2001
(73) Proprietor: Patrenella Capital Ltd., LLC, Wilmington, DE 19801 (US)
(72) Inventor: MATSUMOTO, Yukinori, Sanyo Electric Co., Ltd., Moriguchi City, Osaka 570-8677 (JP); FUJIMURA, Kota, Sanyo Electric Co., Ltd., Moriguchi City, Osaka 570-8677 (JP); SUGIMOTO, Kazuhide, Sanyo Electric Co., Ltd., Moriguchi City, Osaka 570-8677 (JP); OUE, Yasuhiro, Sanyo Electric Co., Ltd., Moriguchi City, Osaka 570-8677 (JP); KITAMURA, Toru, Sanyo Electric Co., Ltd., Moriguchi City, Osaka 570-8677 (JP); OTA, Osamu, Sanyo Electric Co., Ltd., Moriguchi City, Osaka 570-8677 (JP)
(74) Representative: Kazi, Ilya
(86) International application number: PCT/JP2000/000928
(87) International publication number: WO 2000/048699

(56) References cited:
- EP-A- 0 250 121
- DE-A- 2 208 112
- DE-A- 3 101 226
- JP-A- 01 046 496
- JP-A- 02 303 900
- JP-A- 05 212 160
- JP-A- 05 305 185
- JP-A- 06 300 539
- JP-A- 08 215 438
- JP-A- 08 229 771
- JP-A- 08 266 748
- JP-A- 09 141 746
- JP-A- 09 231 413
- JP-A- 09 311 707
- JP-A- 10 040 422
- JP-A- 10 069 543
- JP-A- 10 173 987
- JP-U- 58 052 569
- JP-U- 58 152 991
- JP-U- 63 145 697
- US-A- 5 237 647
- US-A- 5 526 478
- US-A- 5 727 138
- HIROKO ARAI.: 'Tezukuri shashin heno tebiki' SHASHIN KOGYOU SHUPPANSHA, 20 May 1994, (JAPAN), pages 126 - 131, XP002935482

## Description

### Technical Field

The present invention relates to a real three-dimensional modeling apparatus for capturing a target and producing a real three-dimensional model of the target.

### Background Art

For years, various types of three-dimensional scanners which can be used to obtain three-dimensional shape data of various types of objects have been known. Engraving machines which are driven based on the three-dimensional shape data are also available. A three-dimensional shape model can be produced using such an engraving machine.

A system is known in which three-dimensional shape data of a target such as a person or a statue is obtained by irradiating laser ray on the target and producing the target using the engraving machine based on the data.

However, when scanning a target using laser ray to obtain the three-dimensional shape data, the target must not move while being scanned. However, because scanning requires a relatively long period of time, it has been difficult to obtain three-dimensional shape data for a human being.

Moreover, there is another problem that irradiating strong laser ray onto a person introduces a number of safety concerns.

DE 3101226 A1 discloses a device for producing sculptured products. A model, such as the head of a person, is scanned with two receiving heads using sound or light waves. The scanning information is transferred to a data carrier such as a perforated card or perforated strip. The data carrier is input to a control mechanism of a numerically controlled copying machine, on which the desired copy is produced using a tool spindle and milling tool.

EP 0250121 discloses a three-dimensional mapping and modeling apparatus.

### Disclosure of Invention

The present invention is conceived to address the above described problems. It would be desirable to provide a real three-dimensional modeling apparatus which is capable of effectively producing a real three-dimensional model.

The invention provides a real three-dimensional modeling apparatus as set out in claim 1.

Preferably, the image data of the target is captured from a plurality of directions.

The light projection section may be a plane light source for projecting a pattern light.

The light projection section may be a spot light source for irradiating a beam light, the apparatus further comprising a light direction control section for changing the direction of the spot light source.

The light projection sectionmaybe a sheet-of-light source, the apparatus further comprising a light direction control section for changing the direction of the sheet-of-light source.

Embodiments provide a real three-dimensional modeling apparatus comprising an input section for inputting three-dimensional shape data of a target and a formation section for forming a real three-dimensional model from the obtained three-dimensional shape data, wherein the apparatus produces a real three-dimensional model.

Embodiments provide a real three-dimensional modeling apparatus comprising a data input section for inputting image data by capturing a target from a plurality of directions; a modeling section for generating three-dimensional shape data based on the plurality of obtained image data; and a formation section for forming a real three-dimensional model based on the obtained three-dimensional shape data, wherein the apparatus produces a real three-dimensional model.

Embodiments provide a real three-dimensional modeling apparatus comprising a data input section for capturing a target and inputting image data including color data; a modeling section for generating three-dimensional shape data and associated color data; a formation section for forming a real three-dimensional model based on the obtained three-dimensional shape data; and a color processing section for coloring the obtained real three-dimensional model based on the color data, wherein the apparatus produces a colored real three-dimensional model.

A plurality of image data including color data may be input.

The color processing section may comprise a color number reducing section for reducing to a predetermined number of colors the number of the colors in the image data.

The color processing section may comprise application means for applying a photosensitive agent to a real three-dimensional model; and exposing means for exposing by projecting a predetermined pattern on the photosensitive agent based on the color data.

The formation section may divide the three-dimensional shape data of target into a plurality of layers and forms layer-by-layer.

In the layer-by-layer formation, a plurality of sheets may be processed based on the slice outline of the target.

Each of the formed layers may be colored layer-by-layer by a color processing section.

The color processing section may be an inkjet printer.

The color processing section may apply color using a photo-exposure method.

The formation section may comprise a sheet processing section for processing a plurality of sheets based on the slice outline of the target; a sheet layering section for layering the processed sheets; and a color processing section for coloring the sheets to be processed according to the color of the target.

The sheet processing section may divide the obtained three-dimensional shape data into a plurality of sliced layer and processes the sheet corresponding to the sliced layer.

The color processing section may add colors to the processing sliced layer of the sheet to be processed, the colors corresponding to the slice outline of the divided sliced layers.

The real three dimensional model producing apparatus may further comprise a shape template maintaining section for maintaining a shape template and a shape template selecting section for selecting a suitable shape template based on the obtained three-dimensional shape data, wherein a real three-dimensional model is produced by adding formation material to the selected shape template.

The data input section may comprise a plurality of cameras, the position of each of which is fixed.

The data input section may comprise a projector for projecting a predetermined pattern on the target.

The modeling section may prepare a plurality of templates of predetermined shape for a workpiece which is the processing target, and produce a real three-dimensional model using a template resembling closest to the obtained three-dimensional shape data.

The target captured at the data input section may be a human being, and the formation section may separately produce the hair portion and the face portion, and form a real three-dimensional model by combining these.

The hair portion and face portion may be colored in advance.

The modeling section may obtain a three-dimensional shape data with the characteristic points exaggerated by extracting the characteristic points, and the formation section may form a real three-dimensional model based on the three-dimensional shape data with the characteristic points exaggerated.

The formation section may produce a real three-dimensional model with a thin thickness by shrinking the scale along the depth axis.

The formation section may form a real three-dimensional model by milling.

The formation section may create a formation mold and form a real three-dimensional model using the formation mold.

The formation section may be a 3D lithography device.

The real three-dimensional modeling apparatus may further comprise a print text string input section for inputting a print text string and a three-dimensional text information reading section for reading three-dimensional text information corresponding to the print text string, wherein the formation section marks the real three-dimensional model with the three-dimensional text based on the three-dimensional text information.

The real three-dimensional modeling apparatus may further comprise a print text string input section for inputting a print text string, wherein the color processing section prints the text string on the real three-dimensional model based on the text string.

A storing element may be embedded on a real three-dimensional model to be produced.

The storing element may comprise an input/output section for inputting data from or outputting data to another apparatus.

A display element may be mounted on a real three-dimensional model in production.

A communication element may be mounted on a real three-dimensional model in production.

The real three-dimensional modeling apparatus may further comprise an accessory display section for allowing a user to select an accessory.

The real three-dimensional modeling apparatus may further comprise a three-dimensional shape data modifying section for modifying the input three-dimensional shape data based on the selected accessory.

The accessory may be a pair of eyeglasses.

The accessory may be a hair style changing function.

The accessory may be a color assignment changing function.

The accessory may be an ornament.

The accessory may be a shape proportion changing function for the real three-dimensional model.

Embodiments provide a real three-dimensional model generating method comprising a data input step for inputting three-dimensional shape data of a target and a formation step for forming a real three-dimensional model from the obtained three-dimensional shape data, wherein a real three-dimensional model is produced.

Embodiments provide a real three-dimensional model producing method comprising a data input step for inputting image data by capturing a target from a plurality of directions; a modeling step for generating three-dimensional shape data based on the plurality of obtained image data; and a formation step for forming a real three-dimensional model based on the obtained three-dimensional shape data. wherein a real three-dimensional model is produced.

Embodiments provide a real three-dimensional model producing method comprising a data input step for capturing a target and inputting image data including color data; a modeling step for generating three-dimensional shape data and associated color data; a formation step for forming a real three-dimensional model based on the obtained three-dimensional shape data; and a color processing step for coloring the obtained real three-dimensional model based on the color data, wherein a colored real three-dimensional model is produced.

A plurality of image data including the color data may be input.

The color processing step may comprise a color number reducing step for reducing the number of the colors in the image data to a predetermined number of colors.

The color processing step may comprise an application step for applying a photosensitive agent to a real three-dimensional model and an exposing step for exposing by projecting a predetermined pattern on the photosensitive agent based on the color data.

At the formation step, the three-dimensional shape data of target may be divided into a plurality of layers and a model is formed layer-by-layer.

At the layer-by-layer formation, a plurality of sheets may be processed based on the slice outline of the target.

Each of the formed layers may be colored layer-by-layer, at a color processing step.

At the color processing step, color may be applied using a photo-exposure method.

The formation step may comprise a sheet processing step for processing a plurality of sheets based on the slice outline of the target; a sheet layering step for layering the processed sheets; and a color processing step for coloring the sheets to be processed according to the color of the target.

At the sheet processing step, the obtained three-dimensional shape data may be divided into a plurality of sliced layer and the sheets are processed corresponding to the sliced layers.

At the color processing step, colors corresponding to the slice outline of the divided sliced layer may be added on the processing sliced layer of the sheet to be processed.

The real three dimensional model producing method may further comprise a shape template selecting step for selecting a suitable shape template based on the obtained three-dimensional shape data, wherein a real three-dimensional model is produced by adding formation material to the selected shape template.

At the modeling step, a plurality of templates of predetermined shape for a work which is the processing target maybe prepared, and a real three-dimensional model may be produced using a template resembling closest to the obtained three-dimensional shape data.

The target captured at the data input step may be a human being, at the formation step the hair portion and the face portion may be separately produced, and the real three-dimensional model may be formed by combining these portions.

At the modeling step, a three-dimensional shape data with the characteristic points exaggerated by extracting the characteristic points maybe obtained, and, at the formation step, a real three-dimensional model may be formed based on the three-dimensional shape data with the characteristic points exaggerated.

At the formation step, a real three-dimensional model with a thin thickness may be produced by shrinking the scale along the depth axis.

At the formation step a real three-dimensional model may be formed by milling.

At the formation step, a formation mold may be created and a real three-dimensional model may be formed using the formation mold.

The real three-dimensional model producing method may further comprise a print text string input step for inputting a print text string and a three-dimensional text information reading step for reading three-dimensional text information corresponding to the print text string, wherein, at the formation step, the real three-dimensional model is marked with the three-dimensional text based on the three-dimensional text information.

The real three-dimensional model producing method may further comprise a print text string input step for inputting a print text string, wherein, at the color processing step, the text string is printed on the real three-dimensional model based on the text string.

Embodiments provide a three-dimensional modeling apparatus comprising a light projection section for projecting light onto a target; a target image reflecting section for further reflecting light projected onto the target and reflected therefrom; an image capturing section for capturing the target image reflected at the target image reflecting section; and a modeling section for generating the three-dimensional shape data of the target based on the received light data.

Embodiments provide a three-dimensional modeling apparatus comprising a data input section for inputting image data by capturing a target from a plurality of directions; a modeling section for generating three-dimensional shape data based on the plurality of obtained image data; and a reflecting section for reflecting the image of the target, wherein image data of the image reflected at the reflecting section is input at the data input section.

Embodiments provide a three-dimensional data generating apparatus comprising a data input section for inputting image data by capturing a target from a plurality of directions, wherein the data input section comprises a parameter setting section for allowing external setting of a data input parameter.

Embodiments provide a pseudo-three-dimensional data generating apparatus comprising a data input section for inputting image data by capturing a target object from a plurality of directions, wherein the data input section comprises a parameter setting section for allowing external setting of a data input parameter.

Embodiments provide a three-dimensional data generating apparatus comprising a data input section for inputting image data by capturing a target from a plurality of directions and a modeling section for generating three-dimensional shape data based on the plurality of obtained image data, wherein the data input section comprises a parameter setting section for allowing external setting of a data input parameter.

Embodiments provide a three-dimensional data generating apparatus comprising data input sections for inputting image data by capturing a target from a plurality of directions, wherein a portion of the data input sections comprises a data input reference parameter determining section for determining the reference value for a data input parameter and each of the other data input sections comprises a parameter setting section capable of setting a data input parameter determined at the data input reference parameter determining section.

Embodiments provide a pseudo three-dimensional data generating apparatus comprising data input sections for inputting image data by capturing a target from a plurality of directions, wherein a portion of the data input sections comprises a data input reference parameter determining section for determining the reference value for a data input parameter and each of the other data input sections comprises a parameter setting section capable of setting a data input parameter determined at the data input reference parameter determining section.

Embodiments provide a three-dimensional data generating apparatus comprising a plurality of data input sections for inputting image data by capturing a target from a plurality of directions and a modeling section for generating three-dimensional shape data based on the plurality of obtained image data, wherein one or more of the data input sections include a data input reference parameter determining section for determining a reference value for a data input parameter and each of the other data input sections includes a parameter setting section capable of setting a data input parameter determined by the data input reference parameter determining section.

In the three-dimensional data generating apparatus, the data input section may be a camera and the data input parameter may be any of white balance parameter or exposure parameter.

In the pseudo three-dimensional data generating apparatus, the data input section maybe a camera and the data input parameter may be any of white balance parameter or exposure parameter.

Embodiments provide a three-dimensional data generating method. The method comprises a data input step for inputting image data by capturing a target from a plurality of directions, wherein the data input step comprises a parameter setting step for externally setting a data input parameter.

Embodiments provide a pseudo three-dimensional data generating method comprising the step of a data input step for inputting image data by capturing a target object from a plurality of directions, wherein the data input step comprises a parameter setting step for externally setting a data input parameter.

Embodiments provide a three-dimensional data generating method comprising a data input step for inputting image data by capturing a target from a plurality of directions, wherein the data input step comprises the steps of a data input reference parameter determining step for determining the reference parameter when data is input and an image input step for inputting an image based on the reference parameter.

Embodiments provide a pseudo three-dimensional data generating method comprising the step of a data input step for inputting image data by capturing a target from a plurality of directions, wherein the data input step comprises the steps of a data input reference parameter determining step for determining the reference parameter when data is input and an image input step for inputting an image based on the reference parameter.

Embodiments provide a three-dimensional data generating method comprising a data input step for inputting image data by capturing a target from a plurality of directions and a modeling step for generating three-dimensional shape data based on the plurality of obtained image data, wherein the data input step further comprises a reference parameter determining step for determining the reference parameter when data is input and an image input step for inputting an image based on the reference parameter.

The three-dimensional data generating method the data input parameter may be white balance parameter or exposure parameter.

In the pseudo three-dimensional data generating method the data input parameter may be white balance parameter or exposure parameter.

### Brief Description of Drawings

Fig. 1 is a block diagram showing the structure of the present invention according to one preferred embodiment.
Fig. 2 is a conceptual diagram showing the structure of the present invention according to another preferred embodiment.
Fig. 3 is a diagram showing calibration.
Fig. 4 is a diagram showing a structure for projecting a random pattern.
Fig. 5 is a diagram exemplifying a random pattern.
Fig. 6 is a diagram showing usage of a template.
Fig. 7 is a diagram showing a structure of a forming mold.
Fig. 8 is a diagram showing another exemplary structure of a forming mold.
Fig. 9 is a diagram showing yet another exemplary structure of a forming mold.
Fig. 10 is a flowchart showing the coloring process using a resist.
Fig. 11 is a flowchart showing the coloring process using a photosensitive agent.
Fig. 12 is a diagram showing a structure for pattern projection.
Fig. 13 is a diagram showing another exemplary structure for pattern projection.
Fig. 14 is a flowchart for the coloring process by removing unnecessary parts.
Fig. 15 is a diagram showing the coloring process by removing unnecessary parts.
Fig. 16 is a diagram showing the coloring process using a heat-shrinkable film.
Fig. 17 is a diagram showing coloring process using a stamp.
Fig. 18 is a diagram showing coloring process by three-axes driving an inkjet nozzle.
Fig. 19 is a diagram showing an example where an inkjet nozzle and a milling head are placed together.
Fig. 20 is a diagram showing a structure of a three-dimensional modeling apparatus according to another embodiment of the present invention.
Fig. 21(a) and 21(b) are diagrams for explaining the positioning of irradiation sources.
Fig. 22(a) and 22(b) are diagrams for explaining a laser ray irradiating device.
Fig. 23(a) and 23(b) are diagrams for explaining the positioning of irradiation sources.
Fig. 24 is a diagram showing a structure of a three-dimensional data generating apparatus according to another embodiment of the present invention.
Fig. 25 is a diagram showing the flow of data input.
Fig. 26 is a diagram showing the estimation method for face position.
Fig. 27 is a diagram showing the estimation method for chin position.
Fig. 28 is a diagram showing a simultaneous formation method for a plurality of real three-dimensional models.
Fig. 29 is a diagram explaining an example where simultaneous formation of a plurality of real three-dimensional models is difficult.
Fig. 30 is a diagram explaining an example where simultaneous formation of a plurality of real three-dimensional models is possible.

Best Mode for Carrying Out the Invention Embodiments of the present invention will now be described referring to the drawings.

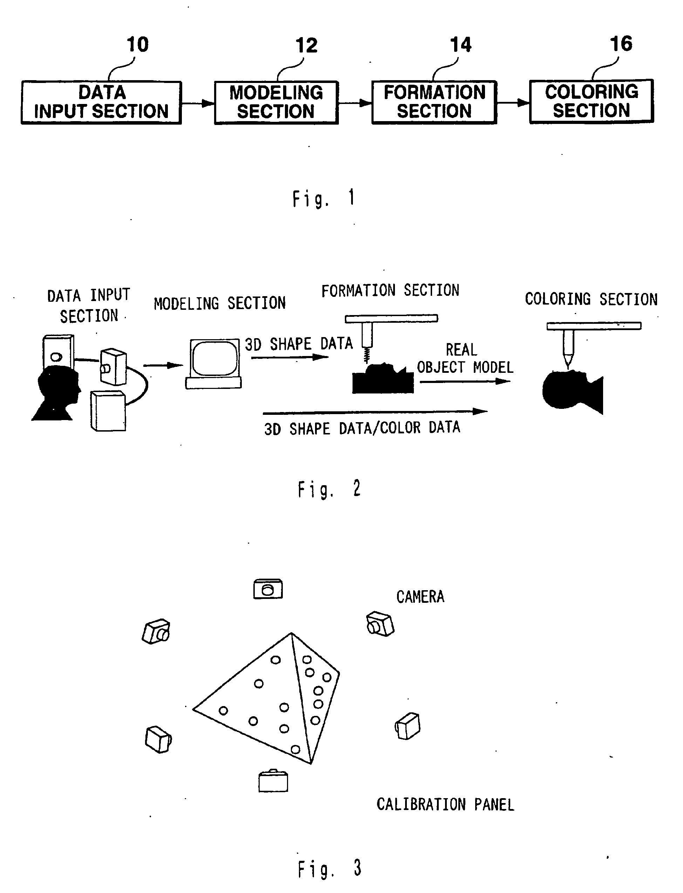

Figs. 1 and 2 show a structure of a real three-dimensional model generating apparatus according to one embodiment of the present invention.

A data input section 10 captures a target such as a person or the face of a person, and produces an image data. The data input section 10 includes a plurality of fixed color CCD cameras, as shown in Fig. 2, and obtains color image data of the target at a plurality of positions.

The color image data including the color information obtained by the data input section 10 is then input to a modeling section 12. The modeling section 12 includes a personal computer and performs three-dimensional modeling based on the plurality of image data of the target captured from the plurality of positions, to obtain three-dimensional shape data of the target.

The three-dimensional shape data includes the color data of the target. For the three-dimensional modeling, any method can be used such as, for example, the method disclosed in Japanese Patent Laid-Open Publication No. Hei 10-124704.

The obtained three-dimensional shape data is input to a formation section 14. The formation section 14 is, for example, a milling drill which can move with respect to three axes such as xyz, and machines a workpiece to produce a real three-dimensional model based on the input three-dimensional shape data.

The obtained real three-dimensional model is then supplied to a coloring process section 16. The coloring process section is for coloring the real three-dimensional model, and, when the target is a person, colors at least the eyes and the mouth.

As described, in this embodiment, the image data is obtained by capturing the target using cameras. Thus, it is safe even when the target is a human being compared to using laser ray. Moreover, color data is obtained for coloring at the coloring process section. Because of this, a real three-dimensional model can be produced which includes color information, and which thus contains unique characteristics.

In the following description, the term "three-dimensional shape data" refers to data on the three-dimensional shape information of the target, and may include the color information. The three-dimensional shape data is obtained by inputting an image at the data input section and performing a modeling process at the modeling section. When the data input section is a three-dimensional shape measurement device, the three-dimensional shape data may be obtained at the data input section. Moreover, data which is obtained by changing, modifying, integrating, and/or processing the obtained three-dimensional shape data is also referred to as the three-dimensional shape data. The term "real three-dimensional model", on the other hand, refers to a three-dimensional object produced at the formation section based on the obtained three-dimensional shape data. The "real three-dimensional model" also includes the real three-dimensional model as defined above, colored at the coloring process section.

The term "three-dimensional data" is used interchangeably with the term "three-dimensional shape data" (which may include the color information). A term "pseudo three-dimensional data", on the other hand, refers to data which does not contain the three-dimensional shape information of the target but which can display the target in virtual three-dimension. One example format for pseudo-three-dimensional data would be QuickTime VR. The term "three-dimensional model" refers to both the real three-dimensional model and the three-dimensional data as defined above. "Structure of the Data Input Section and the Modeling Section"

The data input section 10 employs cameras for capturing a target. In general, in order to obtain three-dimensional shape data, a plurality of image data from a plurality of directions are necessary for each immovable target. Therefore, it is preferable to fix a plurality of cameras at predetermined positions to simultaneously capture the target. However, it is also possible to movably mount a camera on a rail and obtain a plurality of image data by moving the camera.

The absolute positions of the plurality of fixed cameras must be precisely determined, but in general this may be difficult with the mechanical means. Therefore, it is preferable to perform calibration of the camera positions by placing a reference object with a predetermined pattern in the camera view and calibrate the camera position based on the image data of the reference object, as shown in Fig. 3. In this manner, the mounting of the cameras itself can be simplified and, at the same time, their positions can be precisely detected. It is preferable to perform the calibration periodically, e.g., on an everyday basis, or on an every week basis.

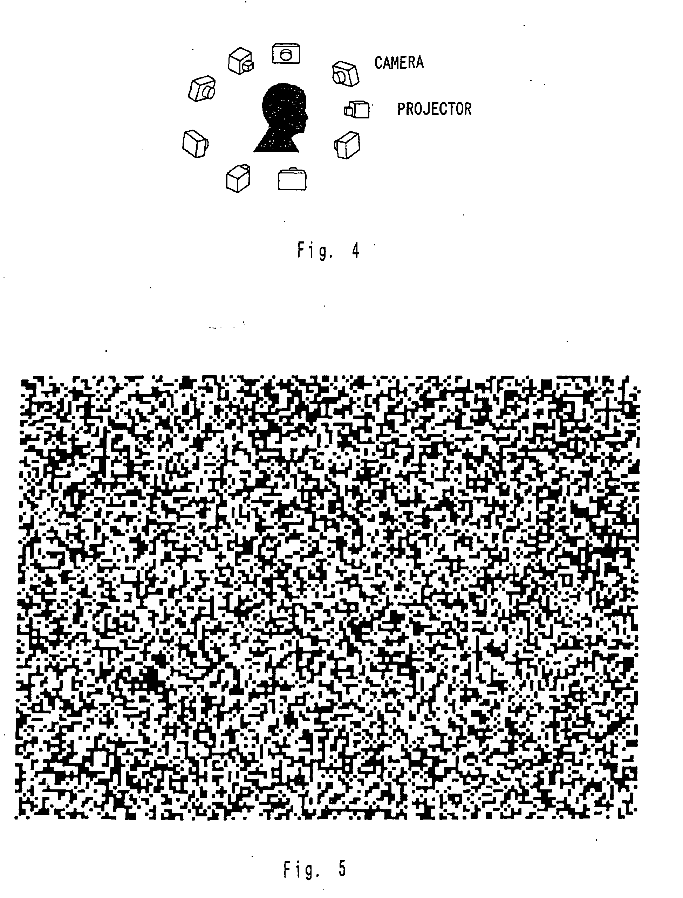

In order to precisely obtain three-dimensional shape data for a target, each of the sections of the target must be seen differently from a plurality of directions. Therefore, it is preferable to project a predetermined pattern onto the target using a projector as shown in Fig. 4. In this manner, precise three-dimensional shape data can be obtained, even for sections that have uniform colors or where color differences are small.

This pattern can be removed from the color data by data processing or, alternatively, the color data can be obtained from the image data without the pattern projected. A random pattern as shown in Fig. 5, for example, can be used as the projection pattern.

When obtaining three-dimensional shape data using such a random pattern, by obtaining depth data by a stereo method using a plurality of cameras, a high precision modeling is possible even for a recess section.

As a camera, it is preferable to use a camera with a wide-angle lens. By employing such cameras, a plurality of cameras can be installed in relatively small spaces.

The data input section 10 captures the target using the cameras and extracts the target area in the image. It is therefore preferable that the background be a constant color to facilitate extraction of the target area in the image.

For example, it is preferable to provide a room with the four walls colored in one color and to place the target at the center of the room. In particular, when the target is a person, it is preferable to place a chair at the center of the room and have the person (target) sit on the chair.

When the target is a person, the image captured from the back is usually of less importance. Therefore, it is preferable to provide an entrance at one wall of the room, have the person sit facing the entrance, and to unify the color of the walls other than the wall with the entrance. It is also preferable to omit the image data from the back when the target is a person.

Furthermore, when the target has a color identical to the background color, extraction cannot be performed correctly. Therefore, it is also preferable to configure the room so that the background color (the wall color of the room) is changeable. For example, by using a projector, light of a predetermined color can be projected from outside, to thereby set the wall color.

It is also preferable to use at least two colors for the background color, obtain image data with two types of background colors, and extract the target area in the image by the union of the extracted results at the two background colors. In this manner, the extraction of the target area in the image can be precisely done for targets of any color.

It is also preferable to provide lighting apparatuses at the corners of the room for uniform lighting effect on the target and light up the room so that there will be no shadows on the target.

In the above, an example is shown where the projection pattern is a random pattern. However, it is also possible to use various other patterns such as a black and white stripe pattern and a color stripe pattern. It is also possible to employ for inputting the three-dimensional shape data a three-dimensional shape measuring device using a triangulation method with a laser ray.

It may in some cases be preferable that the three-dimensional shape data input as described above be modified through a modification process. For example, there may be cases where input failure occurs for a portion of the three-dimensional shape data such as the hair portion. Moreover, even when the input is successful, there are cases where, when forming the actual model, the removal of unnecessary portions is desirable. Specifically, when a human face is input, the three-dimensional shape data is usually generated with a portion of the shoulder. In such a case, it is preferable to remove the unnecessary portions of the shoulder and to form the portion above the neck at the formation section.

In order to solve the above problem, the following processes are performed at the three-dimensional shape data modifying section.

### 1. When input for three-dimensional shape data fails

When input for three-dimensional shape data fails, three-dimensional shape data can be generated by detecting the void (missing) portion in the three-dimensional shape data and performing, for example, a linear interpolation process using the three-dimensional shape data near the missing portion. Alternatively, it is possible to pre-provide a plurality of templates with no data missing and to select a template that resembles closest to the three-dimensional shape data with missing portion.

Then, the missing portion of the three-dimensional shape data is replaced by the selected template data. In this case, there is a possibility that a discontinuity will be created at the boundary between the portion that has been replaced and the portion that has not. In order to avoid such a discontinuity, it is preferable to perform smoothing process on the three-dimensional shape data.

### 2. When an unnecessary portion of the three-dimensional shape data is to be removed

When an unnecessary portion of the three-dimensional shape data is to be removed, preformed face templates can be provided. The face template can be simple, such as an egg-shaped template, or can be a gradation pattern having an egg-shaped expansion based on a Gaussian distribution. The obtained three-dimensional shape data is projected onto a two-dimensional screen from a point of view at the front side and matching process is performed on the two-dimensional screen.

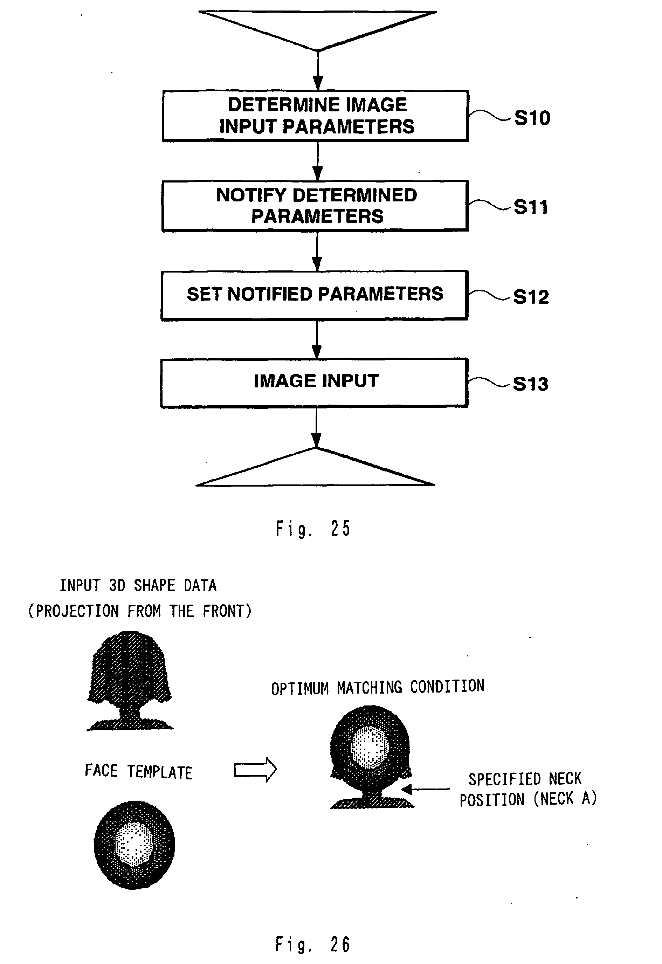

When an optimal match is found, the neck portion is estimated, and portions below the neck portion can be removed. An example of input three-dimensional shape data, face template, and optimal matching is shown in Fig. 26.

When a more precise removal process is to be performed, it is preferable to re-examine the three-dimensional shape data from the neck portion estimated as above (neck A) to identify the chin position, re-estimate the neck portion, and remove the portion below the re-estimated neck portion. The identification of chin position is relatively simple.

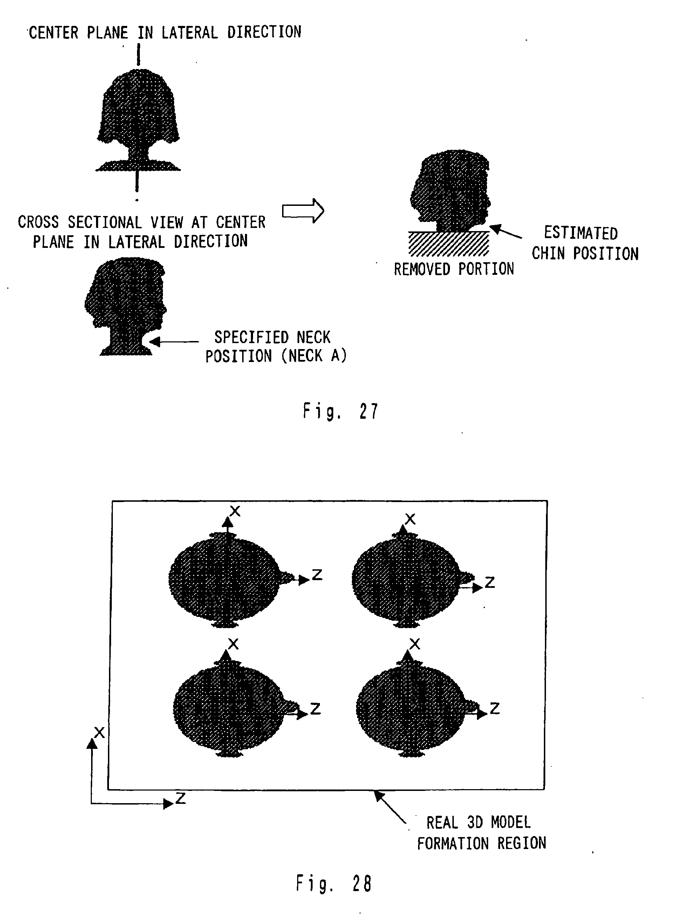

Specifically, the center sliced layer of the three-dimensional shape data in the right and left direction is calculated, and cross sectional data of the three-dimensional shape data at this sliced layer is obtained. Then, the chin portion can be identified by extracting a portion where the positive curvature is great, which is a characteristic of the chin, around the estimated neck A. An example of such a process is shown in Fig. 27.

In addition, it is also preferable that the input section includes an interface for setting a mask, so that a user can indicate the removal sections using the mask. The interface shows at least one of the input images and a template for masks, and the user can suitably set the mask by changing the size, shape, and position of the mask using a mouse or a joystick.

### "Structure of the Formation Section"

The formation section 14 produces a real three-dimensional model based on the three-dimensional shape data. As the formation section 14, a milling drill capable of three-dimensional processing can be used, as described earlier. When the target is a human face, a process with only one drill axis direction is also possible. However, in order to precisely process features such as nostrils, it is preferable to use a processing device which can also perform rotation of the drill axis direction.

The material to be used as the basis for the real three-dimensional model includes a scantling and a round bar. However, when the target is known to some extent, for example, when the target is a human face, it is preferable to prepare a template (a prototype of the work to be processed) which resembles the shape of the target and process the template. In this manner, the time required for processing can be reduced.

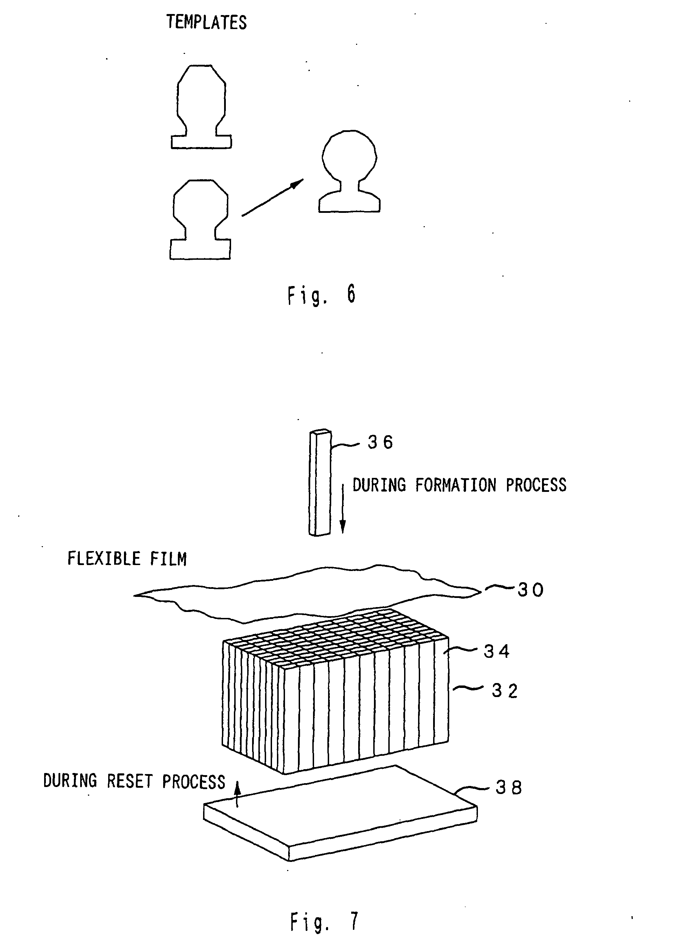

Moreover, various types of templates can be prepared, as shown in Fig. 6, and a template closely resembling the obtained three-dimensional shape data can be selected for processing.

In the example shown in Fig. 6, a template for a round face and a template for thin face are separately prepared, and a suitable template for processing can be selected according to the shape of the target face. In this manner, processing can be facilitated and the processing time can be further reduced. Moreover, by using such a template, the amount of waste generated during milling can also be reduced.

Furthermore, it is also possible to modify the obtained three-dimensional shape data by morphing so that the data more closely resembles the shape of the selected template and to process the template, resulting in further reduction in the processing time.

For the area corresponding to the target's hair, it is possible to use a pre-provided template without processing. In other words, hair is not usually as important, and it is likely that a template chosen from among few types of pre-provided templates will provide a sufficient match. Therefore, by preparing few types of templates for the hair portion, it is possible to select and use one template from among the prepared templates. It is also possible to separately prepare the templates for the hair portion and the templates for the face portion.

In this case, the hair portion can be colored in black. In this manner, coloring process for the hair portion can be omitted. Even when the coloring process must be performed, by separately coloring the hair portion, the overall coloring procedure can be simplified.

It is preferable that the hair portion is formed so that it is applied to the face portion by covering on the upper section of the face, similar to a wig. It is also possible to form the hair portion as a wig with a thread as the hair.

It is also possible to generate a forming mold and produce a real three-dimensional model using the mold. Fig. 7 shows a forming mold using a flexible film 30 and a pin assembly 32. The pin assembly 32 is constructed from a plurality of pins 34, each of which is movable and fixable. As shown in the figure, by determining the positions of one or more of pins 36 by an actuator and applying the pin(s) 36 via the flexible film 30, the positions for each of the pins 34 of the pin assembly 32 can be set. Once the shape of the pin assembly 32 is determined, the shape of the flexible film 30 which covers the pin assembly is also determined.

It is possible to create a forming mold by constructing an object with the pin assembly 32 having the positions of pins 34 fixed and the flexible film 30, and generate a real three-dimensional model by filling a material into the forming mold and solidifying the material. By forming a mold in this manner, a plurality of real three-dimensional model can be easily produced.

For example, by using a heat resistant film as the flexible film 30, a thermosetting resin can be used as the material for formation by heating.

By applying a reset plate 38 from the opposite side of the pin assembly 32, the pins 34 of the pin assembly 32 pushed by the pins 36 can be restored to their original positions and be ready for the next formation. When the shape of the target is known to some extent, such as when the target is a human face, it is also preferable to set the shape of the reset plate 38 into a shape corresponding to a general shape corresponding to the target in order to set the default shape of the pin assembly 32 close to the final shape of the target.

The pins 34 of the pin assembly 32 need not face the same direction. It is also possible to set an axial direction for each pin and place the pins according to the set directions, in order to support a curved shape.

In the example shown in Fig. 7, the pins are passively moved. However, it is also possible to provide a plurality of actuators 40, each of which corresponds to a pin 34, and control the shape of the pin assembly 32 by driving the plurality of the actuators 40. In this case, it is also preferable to provide a flexible film 30 on top of the pins 34.

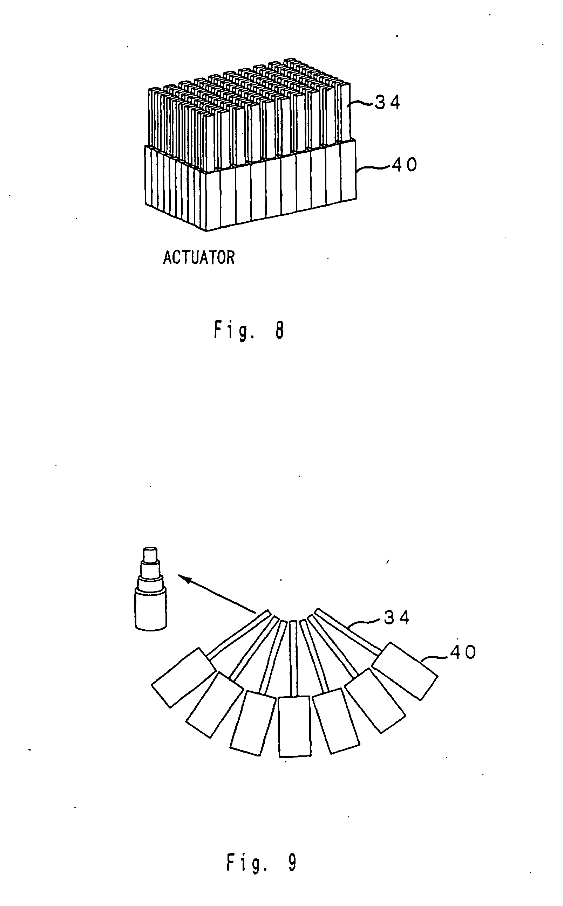

Fig. 9 shows a case where each of the pins 34 are provided in a shape corresponding to a sphere. By arranging the pins 34 in this manner, each pin 34 extends radially outward and actuators 40 are placed thereon. By doing so, the space for placing each actuator 40 can be broadened and, at the same time, the density of the head of the pins 34 can be increased.

The above configuration is also preferable because a human face resembles a sphere. However, the shape of the group of heads of the pins 34 need not be shaped into a perfect sphere, and can be any suitable arrangement according to the shape of the target.

In this arrangement, it is also possible to individually determine the positions of the heads of the pins 34 by individually driving actuators 40, in order to shape the flexible film 30 supported by the pins 34 into a desired shape. Thus, formation of a real three-dimensional model with a desired shape can be achieved.

When forming, rather than using the three-dimensional shape data as it is, it is also possible to shrink the scale of the three-dimensional shape data along the depth axis and form a real three-dimensional model based on the compressed data. A relief-type real three-dimensional model can be formed in this manner. The relief-type real three-dimensional model is easier to form, and the milling waste due to usage of an engraving machine can be reduced.

It is also preferable to extract a characteristic portion of the target and to form a model accordingly. For example, by applying an edge exaggerating process on the three-dimensional shape data, the characteristic portion of the three-dimensional shape data can be exaggerated. By producing a real three-dimensional model with the characteristic portion exaggerated, a real three-dimensional model which accurately captures the characteristics of the target can be obtained.

It is also possible to produce the forming mold using clay. In this case, the clay can be recycled.

Formation method has been described. In any of the described formations, it is preferable to generate a plurality of real three-dimensional models in one formation process by integrating a plurality of input three-dimensional shape data. For example, for creation by milling, the material can be efficiently used. Moreover, for creation by light as described below, the overall processing time can be shortened when a plurality of models are created at once, compared to a case where the models are individually produced.

When a plurality of three-dimensional shape data are gathered, it is necessary to convert the coordinates in each of the three-dimensional shape data in consideration of the formation region. In an example where four input face data are used for simultaneous formation, each data item is a three-dimensional shape data with its own coordinate system. Therefore, it is necessary, as shown in Fig. 28, to translate these to reposition the data in the formation region.

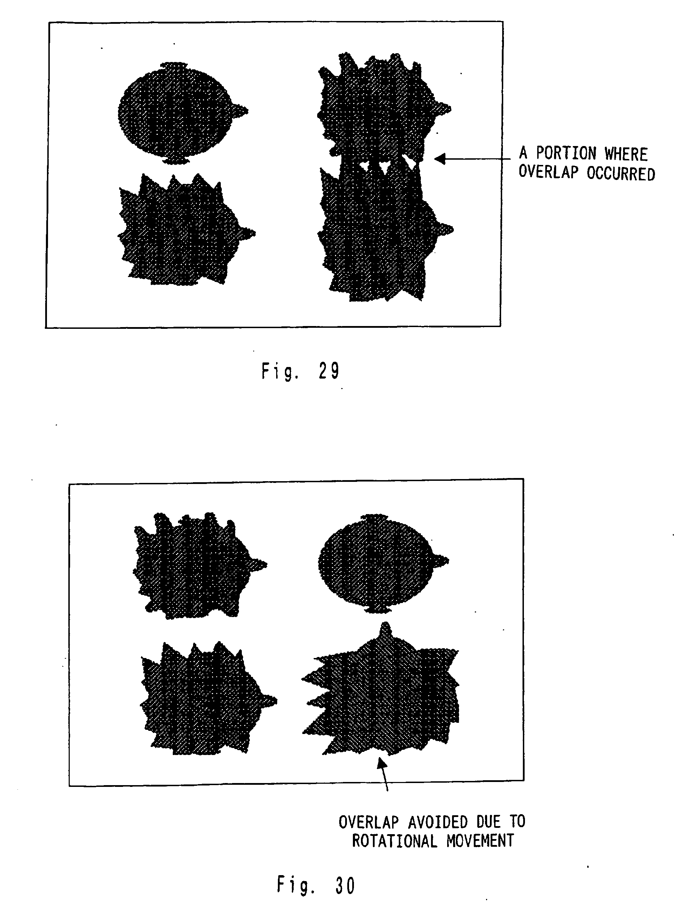

In such a case, there are cases where the translation operation alone is not sufficient to fit the data in the formation region. For example, as shown in Fig. 29, when one of the four face data to be simultaneously generated contains a face with significantly larger number of hair, if the data are placed evenly, an overlapped section will be generated, which will impede formation of a quality model. In this case, it is first determined whether these data to be simultaneously formed can be placed in the formation region without overlapping. When an overlapped section is generated, the three-dimensional shape data in which an overlap exists is extracted and rotated, and possibility for placing in the formation region is reexamined. This process is repeated until overlap is no longer produced, or for a constant number of times. When no result can be obtained after the constant number of examination for no overlap, one of the three-dimensional shape data in which an overlap occurred is removed, and the examination process as described above is repeated. An example of placement without overlap after this process is shown in Fig. 30.

In some cases, it is desirable to form the model with the overlap between the plurality of three-dimensional shape data. In that case, the object of the integrated production of the plurality of data is to increase the added value of the real three-dimensional model to be produced, rather than effective usage of the material or increasing the processing speed.

For example, consider a case for producing a real three-dimensional model based on a group picture. In other words, consider a case where a real three-dimensional model is formed with only a few people. It is difficult to input the three-dimensional shape data with a plurality of people gathered because a larger region must be three-dimensionally input compared to a case for a single person. Therefore, there tends to be problems such as an increase in the price of the input device or decrease in the input precision.

It is thus preferable to individually input the three-dimensional shape data and to integrate the three-dimensional shape data to resemble a group picture when forming the model. The integration can be done by actually capturing a two-dimensional group image and placing three-dimensional shape data based on the two-dimensional image. More specifically, the real three-dimensional model generating apparatus has an user interface, which enables display of a two-dimensional group picture, display of the three-dimensional shape data to be formed, and placement of these shape data using a mouse or a joystick. The user can, for example, move the three-dimensional shape data using a mouse onto the image of each individual in a group picture, while looking at the displayed two-dimensional group picture, so that the three-dimensional shape data overlap. The three-dimensional shape data can be displayed from a point of view different from that of the two-dimensional group picture. It is also possible to specify on the positions of the three-dimensional shape data in the depth direction.

In this manner, a suitable integration of the three-dimensional shape data according to the two-dimensional group picture is enabled. Use of this system along with a system which can automatically judge the face enables process automation.

### "Structure of Coloring Process Section"

The coloring process section 16 applies coloring process on the real three-dimensional model according to the color data. Various methods exist for the coloring process, and example methods will be described below.

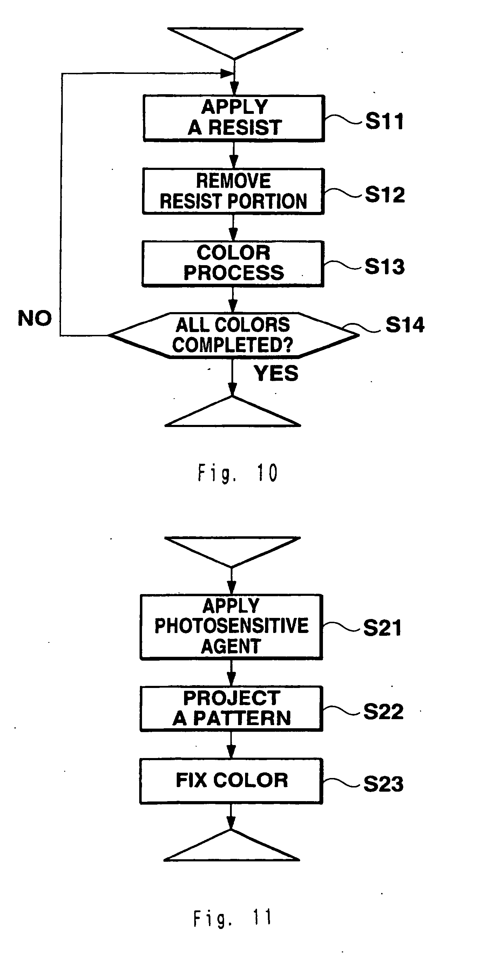

First, a resist can be applied on the real three-dimensional model and coloring process can be performed using the resist. This method will now be described referring to Fig. 10. A resist is applied on the surface of the real three-dimensional model (step S11). When the target is a human face, it is only required to color the face, and thus, in such a case, the face portion is the only target for the coloring process.

Then, using a predetermined pattern, by exposing the necessary portion or thinly milling with a drill, the resist on the portion is partially removed (step S12). The partial removal is performed for the portion to be colored for each color. Coloring process for one color is then performed on the removed portion (step S13).

It is then judged whether coloring process for all the colors are completed (step S14). If not, the procedure jumps back to step S11 and performs coloring process for the next color. Here, by using a material that repels the paint which is used for coloring, selective coloring on the portion where the resist is removed is possible. Because the resist is fairly thin, no problem will be created when a portion of the resist is left on the model. It is preferable to cover the entire model with a durable protection film after all the coloring processes are completed. With this method, it is better to minimize the number of colors. Accordingly, when the target is a human face, it is preferable to simplify the process to some extent by, for example, coloring the eyes with a black color and lips with a red color.

When the above described coloring method is employed, there will be a limit to the number of colors for coloring the target. Therefore, there is a need for a reducing process to reduce the number of colors in the original color data included in the obtained image data. Preferable reduction can be accomplished by, for example, a process with the following steps.
1. Divide the obtained image data into regions
2. Obtain the average color value within one region
3. For each region, compare the average color value with all the prepared available colors, to obtain the available color closest to the average color value
4. Replace the color within the region by the available color determined at step 3

It is also preferable to use a photosensitive agent for the coloring process. This method will be described with reference to Fig. 11. First, a photosensitive agent is applied on the real three-dimensional model (step S21). Then, a pattern is projected based on the color data to expose the photosensitive agent (step S22).

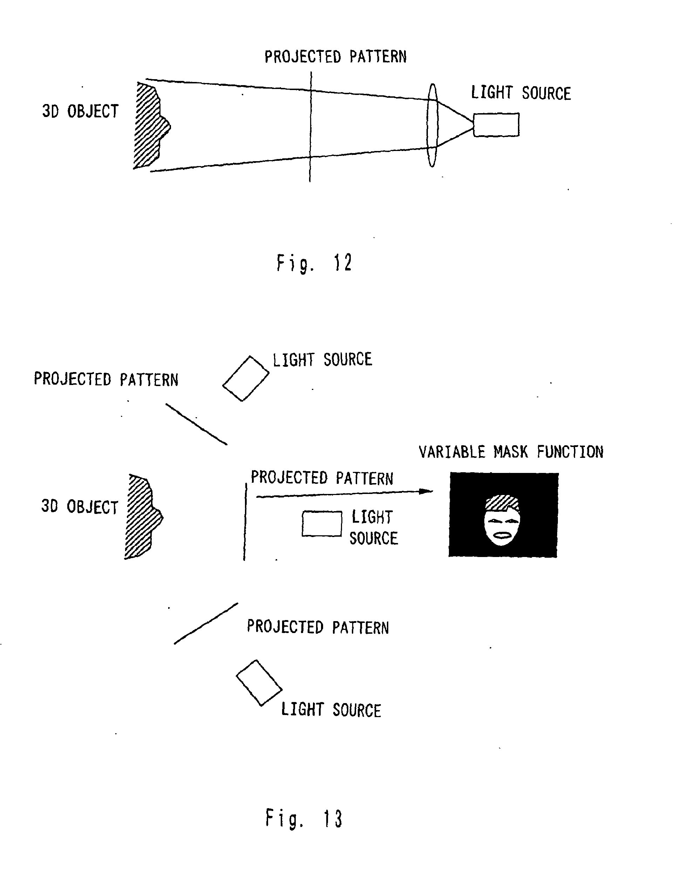

A fixing process is applied to the photosensitive agent to fix the color (step S23). The pattern projection can be achieved, as shown in Fig. 12, by irradiating light from a light source onto a real three-dimensional model (three-dimensional object), with the photosensitive agent applied, via an projection pattern. The projection pattern can be, for example, a transmission type liquid crystal panel.

It is also possible to directly project a pattern onto the real three-dimensional model using a CRT. In this example, the three-dimensional model is a face, and thus, the exposure is performed by one projection from the front side. In particular, by using a long focal length lens to ensure a sufficient focus depth even for a three-dimensional object, exposure of the entire face portion (hemisphere) can be performed using one projection pattern.

When the depth direction is compressed for a relief-type real three-dimensional model, the likelihood of obtaining a uniform exposure is increased. As a photosensitive agent, silver halides such as silver bromide, silver chloride, or silver iodide can be used. These photosensitive agents are applied on the surface of the real three-dimensional model, dried, and then exposed.

Because the real three-dimensional model is a three-dimensional object, there are many cases where sufficiently uniform exposure cannot be achieved due to the direction of the surface. In light of this possibility, as shown in Fig. 13, it is preferable to provide a plurality of projection patterns corresponding to the directions of surfaces of the real three-dimensional model and to expose the photosensitive agent from a plurality of directions.

In such a case, it is preferable to apply masks to limit the amount of light incident on an overlapped section from the plurality of projection patterns. In this case, it is preferable to fix the positions of the light source and the projection patterns, and vary the masking based on the real three-dimensional model.

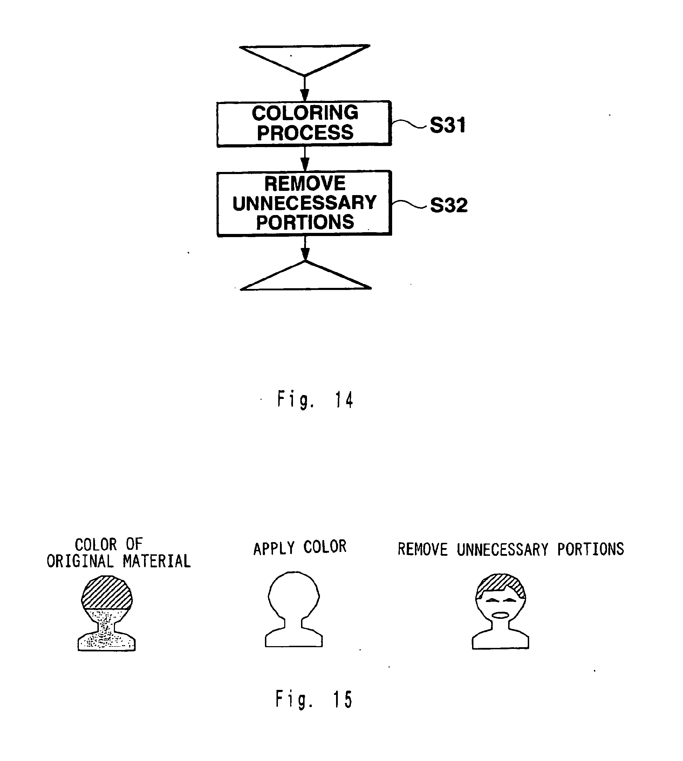

Moreover, it is preferable to remove unnecessary portions after completing the overall coloring processes. In other words, as shown in Fig. 14, the real three-dimensional model is colored (step S31), and then the unnecessary portions are removed by a drill (step S32). In this manner, coloring process for only the necessary portion can be achieved. For example, as shown in Fig. 15, in a human head, the material for the portion above the mouth can have a black color and the material for the portion below the mouth can have a red color. A skin colored paint is then applied to the entire head. By milling and removing the paints on the eye, hair, and mouth sections, black eyes, black hair, and red lips can be formed.

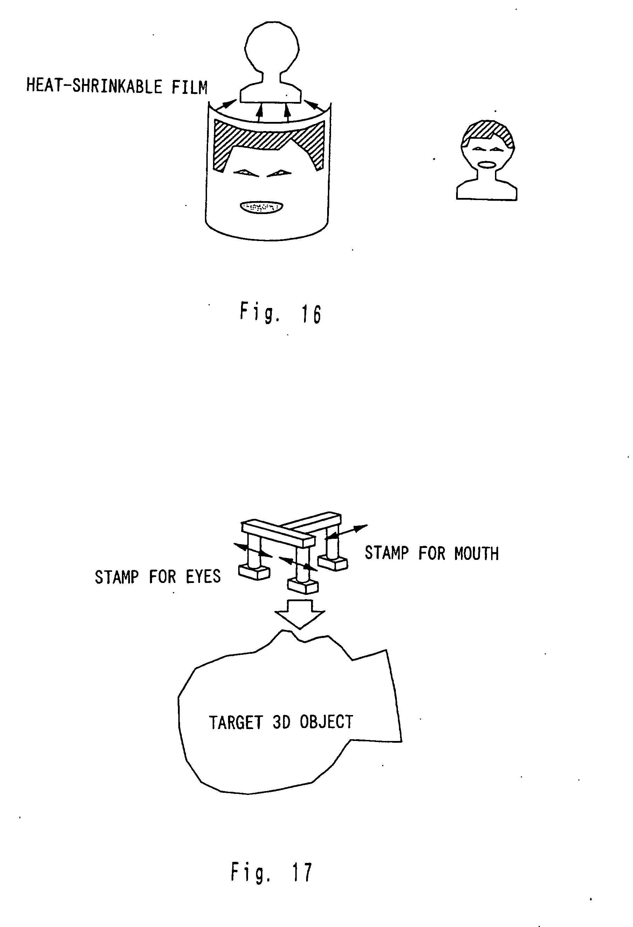

As shown in Fig. 16, it is also preferable to print a pattern on a heat-shrinkable film and to affix the film on the real three-dimensional model. In this case, a shrinking ratio must be calculated from the shape before printing, and thinning the color for a portion with high shrinking ratio is also required. Accurate color after shrinkage can thus be obtained. While color division may occur when film is expanded, shrinkage does not produce such a problem, and, therefore, thicker coloring can be obtained.

As the heat-shrinkable film, it is preferable to apply a thin coat of a water soluble polymer such as PVA (polyvinyl alcohol) on a film of polyvinyl chloride or fluoride resin, to have a printing capability (print). It is also possible to use an expandable cloth in place of the film.

It is also possible to employ the following coloring scheme.

For a human face, the main characteristics are the eyes and moth. Thus, it is preferable to only color the eyes and mouth. In many cases, the positions of these items, rather than the shape, is the characteristic feature. Thus, as shown in Fig. 17, it is preferable to provide two stamps for eyes and one stamp for the mouth and color the real three-dimensional model by pressing these stamps against the surface. In this case, the stamps for the eyes are movable in the horizontal direction of the face and the stamp for the mouth is movable in the vertical direction of the face, allowing for adjustment of the stamp positions. By forming the stamps by a material which can be deformed, such as, for example, a sponge-like material, the surface can easily be colored even when the surface is not completely flat. A sponge-like material is also preferable because it can readily hold the coloring agent in the material.

It is also preferable to prepare a plurality of shapes for the eyes and mouth, select the shape resembling closest to the target, and color the selected shape. It is also possible to drive a plurality of brushes for each color based on the data for the coloring process.

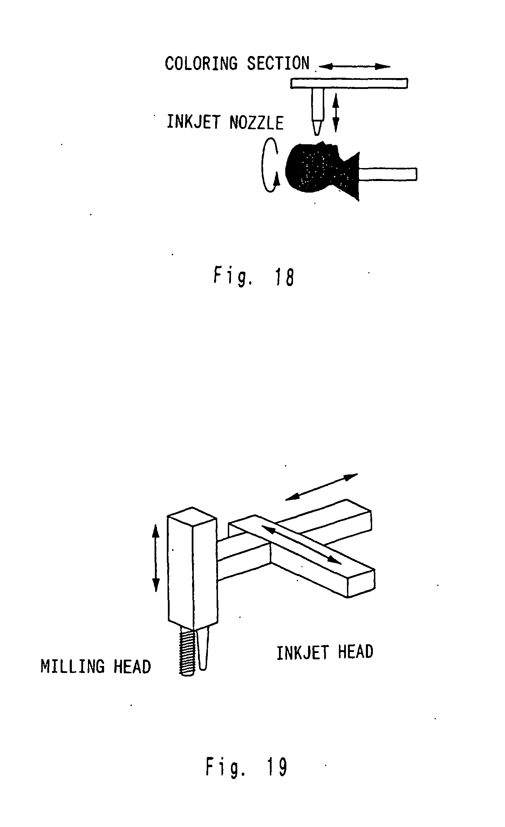

As shown in Fig. 18, it is also preferable to drive an inkjet nozzle with three axes (rotation of the real three-dimensional model, and movement of the nozzle in the y and z directions). In this manner, a predetermined color can be applied to a predetermined location. As shown in Fig. 19, it is also possible to provide both an inkjet nozzle and a milling head with a forming drill on single component. By employing such a scheme, formation and coloring processes can be performed almost simultaneously, and there is a further advantage that only one control mechanism is required. In a case where coloring process is performed after formation, the components can be driven based on the identical data for identical movement, and thus, the coloring process can be efficiently performed.

It is also possible to color the real three-dimensional model by an impact dot method using a wire dot and an ink ribbon.

Moreover, it is also preferable, during the coloring procedure, to use a contact pin sensor to detect the surface position of the real three-dimensional model and to color based on the detected position. In this manner, a precise coloring process can be performed even when the formation precision is insufficient.

It is also possible to transfer using a color processed film.

It is also preferable to layer and bond a plurality of pieces of paper based on the obtained three-dimensional shape data to form a three-dimensional object. In such a method, the target shape is first divided at a plurality of parallel planes corresponding to each of the plurality of pieces of paper to be layered and bonded. For example, such a plane can be a plane perpendicular to the y axis (vertical axis) assigned to the three-dimensional shape data.

After printing the color on the cross section between each plane and the target shape on each piece of paper, the cross sections of these pieces of paper are cut, and the pieces are overlapped. In this manner, colored three-dimensional object can be formed.

It is also possible to use a 3D lithography device as the formation section. In this case, similar to the formation by paper as described above, the target shape is first represented by a plurality of layers, and then, the model is formed layer-by-layer. In this process, after one layer is formed, color is applied to each layer surface, allowing for formation of colored real three-dimensional model. Various methods can be used for coloring, including use of an inkjet printer or photosensitive agent, both described earlier.

In order to quickly perform the 3D lithography process, it is preferable to form the model by preparing a template and filling the periphery. In this case, a plurality of templates can be prepared. A template with a maximum size is selected from among templates which can be fit within the input three-dimensional shape data.

The template formed in this manner is then dipped in a solution of photo-curing resin at the 3D lithography device and light is irradiated only to the area where filling is required. In a 3D lithography device which employs a laser beam for light irradiation, scanning manipulation for irradiating the laser beam on the entire region of curing target is necessary. By using the templates, the size of the scan region can be reduced, and thus, the overall formation time will be shortened.

### "Variations"

It is also preferable to display the three-dimensional shape, including the color, on a display when the three-dimensional shape data is obtained, in order to allow a preview of the real three-dimensional model to be produced. When any number of processes described above are applied to compress, exaggerate the characteristic points, and/or limit the colors, it is preferable to show a display which is as close to the final product real three-dimensional model as possible.

It is also preferable to prepare various options and accessories that are different from the actual target, such as, for example, glasses and hair styles, and to permit mounting these optional items on the real three-dimensional model.

The final real three-dimensional model of a person can be either the head portion only or the complete person. For example, when a complete model is desired, because the face becomes relatively small, it is preferable to form the model by emphasizing the face by setting the face to body ratio to 1:1. It is also preferable to prepare few such variations, so that a customer can select one from among the prepared variations.

When the target is a pet such as a dog, it may be necessary to restrain the pet during capturing. Therefore, it may be preferable to provide a chain at the capturing locations. Extraction of the target from the captured image data can be facilitated by using the same color for the chain as for the background color.

When mass producing and delivering a great quantity of real three-dimensional models, it may be desirable to assign an identification number to each of the real three-dimensional models in order to identify each real three-dimensional model and recognize the relationship to the delivery destination.

It may further be preferable to record the identification number on the real three-dimensional model when forming or color processing the real three-dimensional model. In other words, an identification number for each of the three-dimensional shape data is input by a user or automatically assigned when inputting the initial data. Three-dimensional text data corresponding to the identification number can be assigned to obtained three-dimensional shape data, on a surface (for example, the bottom surface) of the three-dimensional shape data, to produce a recess that can be identified as a text. By performing the formation process based on the data, a real three-dimensional model with the identification number engraved on the surface can be produced, which facilitates later identification of each of the real three-dimensional models. It is also possible to print the identification number on the surface of the real three-dimensional model by a printer during the coloring process.

Moreover, it is preferable to perform the formation process considering a mounting portion for mounting a storage element, display element, communication element, on the real three-dimensional model to be formed. By mounting a storage element such as a compact flash memory, display element such as a compact LCD panel, or by mounting a compact transmitter/receiver on the real three-dimensional model thus formed, it is possible to enable the following operations and thus to increase the pleasure of the three-dimensional model.
1. By recording a voice message, the voice massage can be generated from the real three-dimensional model.
2. By displaying the condition of the real three-dimensional model on the display element, the real three-dimensional model can be treated as a game pet.
3. The three-dimensional models can communicate with each other or with other game machines or a personal computer.

In addition, when the input three-dimensional shape data is data including a portion of the human body in addition to the face or when the data is the overall body data, it is preferable to form the real three-dimensional model to be movable at the joint sections similar to the actual human body which is movable at the joints.

For this purpose, the input three-dimensional shape data can be divided into a plurality of portions with the movable section as the dividing point. This division can be done either manually by a user interface or by providing templates for a human skeleton, and specifying the dividing points by matching the skeleton template with the input three-dimensional shape data. Furthermore, it is also possible to input a plurality of poses, apply three-dimensional matching process to each section, and specify the dividing points by automatically extracting the joints.

The three-dimensional shape data thus divided is then modified in order to embed a connecting tool in the joints. Because the connecting tools are pre-provided for each joint, and the shapes are known, it is possible to automate this procedure.

After the modification process, each of the portions are formed. A final real three-dimensional model is produced by fitting the separately prepared connecting tools in each of the formed portion and linking each of the formed portions.

It is preferable that a driving function such as a micromotor is provided on the connecting tools. When such a motor is provided, a movement input section for the three-dimensional shape data is further provided. The three-dimensional information on the movement of the human target is obtained from the movement input section, and, by moving each of the portions through controlling the driving device based on the movement obtained from the information, it is possible to produce a miniature real three-dimensional model based on the movement characteristic which is unique to the target person. This enables, for example, display of a miniature model in a funeral that reproduces the unique actions of the deceased. In addition, it is possible to realize a mascot doll with the actions of a celebrity.

It is also preferable to generate and display an image, preferably a three-dimensional image reproducing these actions based on the three-dimensional information, instead of actually forming the real three-dimensional model.

It is preferable to integrate the present invention as a single apparatus and place the integrated apparatus in an arcade or an amusement center. In this manner, a user can enter the apparatus and create image data in the same fashion as taking a photograph. After waiting for a brief period of time, the user can obtain a real three-dimensional model doll at the takeout pocket section. A doll of the user can be produced in a similar manner as a picture or a sticker. It is also preferable, when the time before completion of the production is considered to be significant, that a card which the user may later exchange for the finished doll be issued. In such a case, the doll for a user can be automatically discharged to the takeout section by reading the issued card by a card reader.

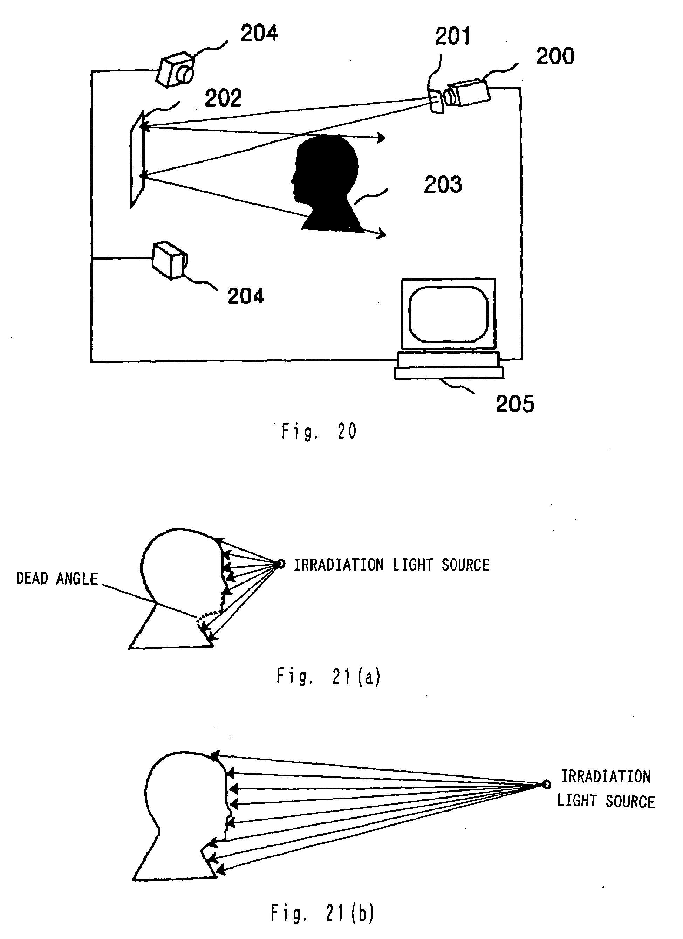

Fig. 20 is a diagram showing a structure of a three-dimensional model generating apparatus according to another embodiment of the present invention.

A light projection section 200 projects a random pattern, slit pattern, or coding pattern assigned on a panel 201 onto a target which is, in this case, a human face. The projected pattern light pattern is reflected at a reflecting section 202 and projected onto the target 203.

An image of the target on which the light pattern is projected is then captured by an image input section 204 such as a CCD camera, and three-dimensional data of the target is produced at a modeling section 205 from the plurality of obtained images by any of the above described methods.

When the distance between the light source of the light projection section 200 and the target is small and the pattern is directly projected on the target, the target itself produces a shadow, resulting in some portion of the target not projected with the pattern. In other words, there will be portions which cannot be seen from the light source (dead angle). In a case shown in Fig. 21(a), no pattern is projected onto a part of the neck, due to a shadow from the chin.

Thus, the shape measurement of these portions will be difficult or inaccurate.

One solution for preventing such possibility of a dead angle is to set the distance between the light source and the target sufficiently large, as shown in Fig. 21(b). However, such a solution causes the size of the overall apparatus to become very large.

Thus, a reflecting section 202 is provided to reflect the projection pattern and project onto the target.

By employing such a method, the light path distance from the light projection section 200 to the target can be set at a large distance while keeping the size of the overall apparatus from becoming large.

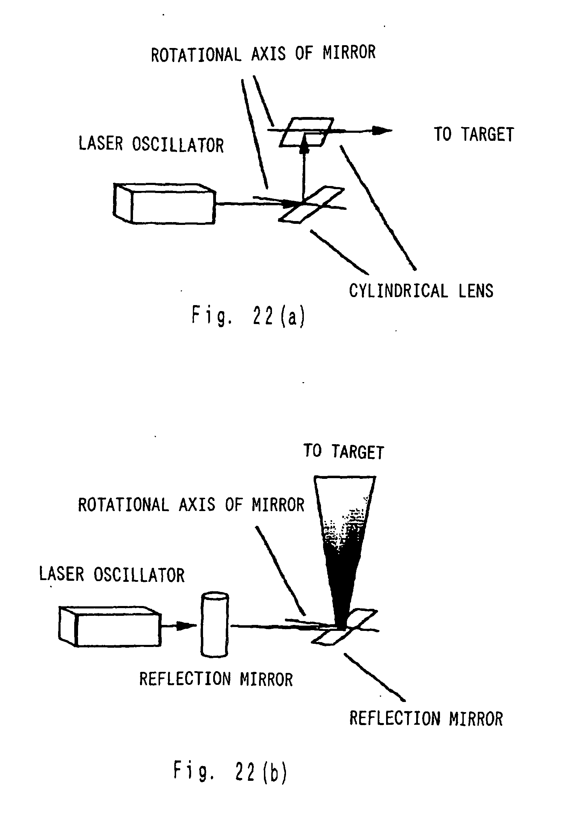

It is also possible that the light irradiating section 200 irradiate a laser ray, rather than the light pattern as described above. A typical laser ray irradiating device may have a structure such as that illustrated in Fig. 22.

In Fig. 22(a), the direction of a beam-type laser ray is changed by a galvano mirror or a polygon mirror, in order to allow a two-dimensional scan.

In Fig. 22(b), a beam-type laser ray is once changed into a slit light at a cylindrical lens and then the direction of the laser ray is changed by a galvano mirror or a polygon mirror, in order to allow a two-dimensional scan.

However, even with these configurations, when the distance to the target is insufficient, there will be problems associated with the produced dead angle. Therefore, setting the light path distance large using a reflecting section is again an effective method for reducing the dead angle.

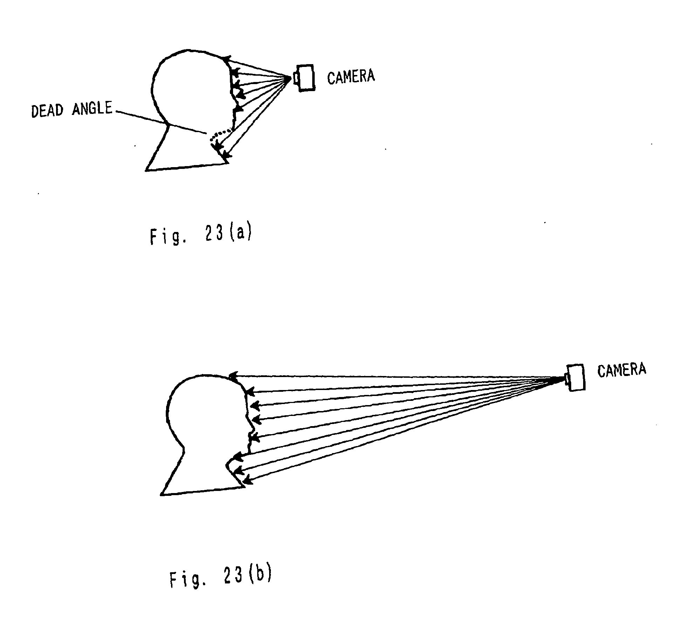

The problem of dead angle is similarly generated when the object with the projected pattern is input. For example, as shown in Fig. 23(a), when an image is to be taken using a CCD camera for an object with the projected pattern, the neck portion which is covered by a shadow of the chin cannot be input due to the reason described above. In such a case, as shown in Fig. 23(b), one solution is to set the distance between the camera and the target sufficiently large, using a lens with a longer focal distance. However, similar to the above, there remains the problem that the overall size of the apparatus becomes very large.

Thus, a camera captures an image of an image of the pattern projected target reflected at the reflecting section. With this configuration, the distance from the target to the camera can be set at a large distance while, at the same time, the size of the overall apparatus can be kept small, resulting in reduced dead angles.

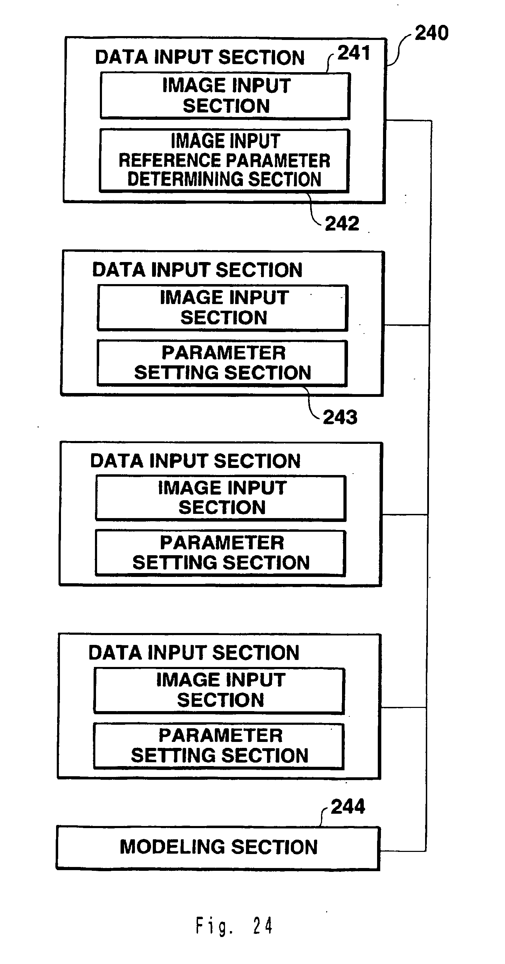

Fig. 24 is a diagram showing a structure of a three-dimensional data generating apparatus according to another embodiment of the present invention.

Provided are a plurality of data input section 240 for capturing a target from a plurality of directions and inputting the image data. Each data input section 240 further includes an image input section 241. As the image input section 241, an analog or digital color CCD camera can be used.

One or more of the data input sections have a data input reference parameter determining section 242 for suitably determining the parameters during the data input, such as white balance and exposure.

The remaining data input sections, on the other hand, have a parameter setting section 243 for setting the parameters to those determined at the data input reference parameter determining section 242. At these data input sections, image input is performed based on the set parameters.

At the modeling section 244, three-dimensional shape data of the target is calculated based on the plurality of images obtained at the data input sections. An example of such a modeling process includes, for example, the method disclosed in Japanese Patent Laid-Open Publication No. Hei 10-124704. The flow of data input will now be described referring to Fig. 25.

Parameters such as white balance and exposure are automatically determined at a data input section (step S10). This can be easily accomplished by automatic white balance and/or automatic exposure functions provided on a common camera.

The determined parameters are then notified to the other data input sections (step S11).

At each of the data input sections, the notified parameters are set at the parameter setting section within each of the data input sections (step S12). In other words, at these data input sections, the parameters are not automatically determined at the respective input sections, but rather, the parameters notified from outside are set.

An image is then input at all of the data input sections based on the set parameters (step S13).

In this manner, by using the parameters determined at one data input section as common parameters, and inputting the image at all the data input sections based on the common parameters, image input with uniform quality can be obtained.

If, on the other hand, the parameters are individually set at each of the data input section to suit the individual views, different parameters will be set as the suitable parameters because (a) the portion of the target which can be seen from the input sections will be different and (b) the background (portion other than the target) which can be seen from the input sections will be different. Therefore, although the color for one element should be identical, it differs for each of the data input sections, causing a problem when one unified three-dimensional shape data is generated.

However, by determining a reference parameter and using the reference parameter as a common parameter, image input is enabled which satisfies the condition that the color for the same element should be identical.

Here, an example is described wherein the reference parameter is automatically determined at one data input section, but the reference parameter can also be determined by an operator. There are some cases where an experienced operator wishes to set a suitable parameter value different from the value automatically determined by the data input section, based on his experience or when he wishes to have a special effect. In such a case, it is preferable to manually set the reference parameters.

In the above example, a case is shown where three-dimensional shape data of the target is created. However, the method can also be applied to a case where it is desired to create pseudo-three-dimensional data, such as such as QuickTime VR data, of the target. By employing the method of the present invention, the problem of colors changing when the target is rotated and displayed can be avoided.

As described, with the present invention, a real three-dimensional model of a target is automatically produced. In particular, because the present invention employs an ordinary passive camera, the image data of the target can be safely obtained. Moreover, by applying a coloring process, a real three-dimensional model which captures the characteristics of the target can better be obtained.

## Claims

1. Areal three-dimensional modeling apparatus comprising:
a light projection section (200, 201) arranged to project light;
a light reflecting section (202) arranged to reflect the light incident from said light projection section, and to project the light to a target (203);
a capturing section (204) for capturing image data of the target where the light is projected;
a modeling section (12, 205) for generating three-dimensional shape data of said target based on the captured image data; and
a formation section (14) for forming a real three-dimensional model from the obtained three-dimensional shape data.

2. The three-dimensional modeling apparatus of claim 1, wherein:
the image data of the target is captured from a plurality of directions.

3. The three-dimensional modeling apparatus of either claim 1 or 2, wherein said light projection section is a plane light source for projecting a pattern light.

4. The three-dimensional modeling apparatus of either claim 1 or 2, wherein said light projection section is a spot light source for irradiating a beam light, and said apparatus further comprises a light direction control section for changing the direction of said spot light source.

5. The three-dimensional modeling apparatus of either claim 1 or 2, wherein said light projection section is a sheet-of-light *source* for projecting a *sheet-of-light*, and said apparatus further comprises a light direction control section for changing the direction of said sheet-of-light source.

## Patentansprüche

1. Vorrichtung zur realen dreidimensionalen Modellierung, mit:
einem Lichtprojektionsabschnitt (200, 201) zum Projizieren von Licht;
einem Lichtreflexionsabschnitt (202) zum Reflektieren des von dem Lichtprojektionsabschnitt einfallenden Lichts und zum Projizieren des Lichts auf ein Target (203);
einem Aufnahmeabschnitt (204) zum Aufnehmen von Bilddaten des Targets, auf das das Licht projiziert wird;
einem Modellierungsabschnitt (12, 205) zum Erzeugen von Daten einer dreidimensionalen Form des Targets auf der Grundlage der aufgenommenen Bilddaten; und
einem Bildungsabschnitt (14) zum Bilden eines realen dreidimensionalen Modells aus den gewonnenen Daten der dreidimensionalen Form.

2. Vorrichtung zur realen dreidimensionalen Modellierung nach Anspruch 1, wobei:
die Bilddaten des Targets aus einer Mehrzahl von Richtungen aufgenommen sind.

3. Vorrichtung zur realen dreidimensionalen Modellierung nach Anspruch 1 oder 2, wobei der Lichtprojektionsabschnitt eine Ebenen-Lichtquelle zum Projizieren eines Lichtmusters ist.

4. Vorrichtung zur realen dreidimensionalen Modellierung nach Anspruch 1 oder 2, wobei der Lichtprojektionsabschnitt eine Punktlichtquelle zum Aussenden eines Lichtstrahls ist und die Vorrichtung ferner einen Lichtsteuerungsabschnitt zum Ändern der Richtung der Punktlichtquelle umfasst.

5. Vorrichtung zur realen dreidimensionalen Modellierung nach Anspruch 1 oder 2, wobei der Lichtprojektionsabschnitt eine Lichtfächer-Lichtquelle zum Projizieren eines Lichtfächers ist und die Vorrichtung ferner einen Lichtrichtungssteuerungsabschnitt zum Ändern der Richtung der Lichtfächer-Lichtquelle umfasst.

## Revendications

1. Dispositif de modélisation tridimensionnelle réelle comprenant :
une section de projection de lumière (200, 201) conçue pour projeter de la lumière ;
une section de réflexion de lumière (202) conçue pour réfléchir la lumière incidente provenant de ladite section de projection de lumière, et pour projeter la lumière sur une cible (203) ;
une section de capture (204) pour capturer les données d'image de la cible sur laquelle la lumière est projetée ;
une section de modélisation (12, 205) pour produire les données de forme tridimensionnelle de ladite cible sur la base des données d'image capturées ; et
une section de formation (14) pour former un modèle tridimensionnel réel à partir des données de forme tridimensionnelle obtenues.

2. Dispositif de mise en forme de modèle tridimensionnel selon la revendication 1, dans lequel :
les données d'image de la cible sont capturées depuis une pluralité de directions.

3. Dispositif de modélisation tridimensionnelle selon l'une ou l'autre des revendications 1 et 2, dans lequel ladite section de projection de lumière est une source de lumière plane pour projeter une lumière de modèle.

4. Dispositif de modélisation tridimensionnelle selon l'une ou l'autre des revendications 1 et 2, dans lequel ladite section de projection de lumière est une source de lumière directive pour rayonner un faisceau de lumière, et ledit appareil comprend en outre une section de contrôle de direction de lumière pour modifier la direction de ladite source de lumière directive.

5. Dispositif de modélisation tridimensionnelle selon l'une ou l'autre des revendications 1 et 2, dans lequel ladite section de projection de lumière est une source de nappe de lumière pour projeter une nappe de lumière, et ledit appareil comprend en outre une section de contrôle de direction de lumière pour modifier la direction de ladite source de nappe de lumière.
